# EUROPEAN PATENT APPLICATION

(11) **EP 1 523 004 A2**
(43) Date of publication of application: **13.04.2005**
(21) Application number: 04104933.9
(22) Date of filing: 08.10.2004
(51) Int. Cl.: G11B 15/68

(54) **A data carrier storage structure and associated method of operation**

(30) Priority: 09.10.2003 GB 0323651
(71) Applicant: Hewlett-Packard Development Company, L.P., Houston, TX 77070 (US)
(72) Inventor: Gold, Stephen, 80528, Fort Collins, CO (US)
(74) Representative: Marsh, David John

(57) **Abstract**

A storage structure comprising: at least one storage unit having a plurality of locations, each location having a bay to store an item, such as a tape cartridge, carrying machine readable information, each bay having an associated reader operable to read the machine readable information from an item stored in that bay.

## Description

THIS INVENTION relates to a storage structure and associated method and more particularly to a storage structure for storing items carrying machine readable information, particularly items such as tape cartridges.

Data storage libraries, in particular tape libraries, offer a particularly convenient means for storing large amounts of data, particularly back-up data. A tape library will comprise a number of slots or bays within each of which a tape is received. A library robotic tape picker roams the bays and picks tapes from respective storage bays and inserts them into a tape drive in order to access the data stored on the tape. A user may manually unload tapes from the slots and manually re-load tapes into the slots.

Typically, in present tape libraries, the slots are provided in magazines which can be removed from the library and replaced with a fresh magazine. A tape library may, therefore, comprise a plurality of magazines, each magazine having a plurality of slots to receive tape cartridges. It is normal to provide a magazine for a particular type of tape cartridge. Accordingly, one would expect a magazine to be dedicated to a particular media type such as LTO, DLT, SDLT tape formats.

When a user intervenes and inserts new tape cartridges into a tape library, either individual tape cartridges or replacing a magazine, the library has to make two inventories of the media within the library: a physical inventory; and a logical inventory. These inventories can take many minutes and even hours to perform and effectively prevent any tape movement operations whilst the inventory is being performed. It will therefore be appreciated that during this time the tape library is effectively out of action and cannot be accessed. The inability to access data stored in the library is, of course, a distinct disadvantage.

The physical inventory determines whether there is a tape present in a tape slot and whether that tape has a bar code associated with it. The physical inventory is usually limited to scanning the media slots affected by the user action, for example, if the library is magazine-based, then it is only necessary to scan the new magazines replaced by the user rather than the entire library. As an example, the physical inventory of a Hewlett Packard SureStore 6/140 tape library can take 12 minutes when checking all the magazines at initial power-up.

The logical inventory determines what the media content of the tapes in the library comprises and is usually carried out under control of a back-up application so as to determine what back-up sessions are stored in the tape library. This information is usually obtained by reading media header information on the tape written by the back-up application. The media header information usually comprises the first portion of the information stored on the tape. This information is gathered by loading every tape in the library into a tape drive so that the back-up application can read the media header information from each of the tapes. This can take an exceedingly long time - a time proportional to the number of tapes stored in a tape library.

Thus, whenever there is any user interaction with the tape library involving loading new tapes, relocating tapes within a tape library or loading or unloading magazines, it can take several minutes or longer before the tapes in the tape library are available for use to back-up data thereon or restore data therefrom since the inventory processes monopolise the library robotics.

It has been proposed to provide tape media with a so-called "cartridge memory" (CM). This technology is used in some media formats such as LTO and AIT to help speed up the logical inventory. The cartridge memory comprises a small memory chip in the form of a passive wireless communication device such as an RF transponder attached to or located inside each tape cartridge. Each cartridge memory has a unique serial number together with a writable memory which contains data useful to back-up applications such as the media header information and media history. Thus, rather than providing the media header information on the tape itself, the media header information is provided independently on the physical tape cartridge by the cartridge memory. The library robotic tape picker carries a cartridge memory reader so that whilst a library performs the physical inventory, it can also be performing the logical inventory by using the carried reader to read the cartridge memory on each of the tape cartridges that the picker is proximate. Thus, as the physical inventory information is gathered, the media header information is read from the cartridge memory of a respective tape cartridge to provide the logical inventory. This is convenient because it means that the logical inventory is performed without having to load each tape cartridge into a tape drive thus dramatically speeding up the logical inventory process. However, the tape library must still perform the physical inventory process which can take several minutes before normal use of the library can be restored.

One aspect of the present invention provides a storage structure comprising at least one storage unit having a plurality of locations, each location having a bay to store an item carrying machine readable information, each bay having an associated reader operable to read machine readable information from an item stored in that bay.

Another aspect of the present of the present invention provides a storage unit comprising a plurality of locations, each location having a bay to store an item carrying machine readable information, each bay having a reader operable to read the machine readable information of an item stored in that bay.

A further aspect of the present invention provides a method of providing an inventory of items in a storage structure, the storage structure having a plurality of locations, each location having a bay to store an item carrying machine readable information, each bay having an associated reader operable to read the machine readable information on an item stored in that bay, the method comprising the steps of: the readers reading the machine readable information from items stored in the bays; and processing the read information in combination with the location of the associated reader to provide an inventory of the items in the bays of the storage structure.

In order that the present invention may be more readily understood embodiments will now be described by way of example with reference to the accompanying drawings, in which:
Figure 1 is a schematic view of a storage unit embodying the present invention for use in a storage structure; and
Figure 2 is an exploded schematic perspective view of a storage structure in accordance with another embodiment of the present invention.

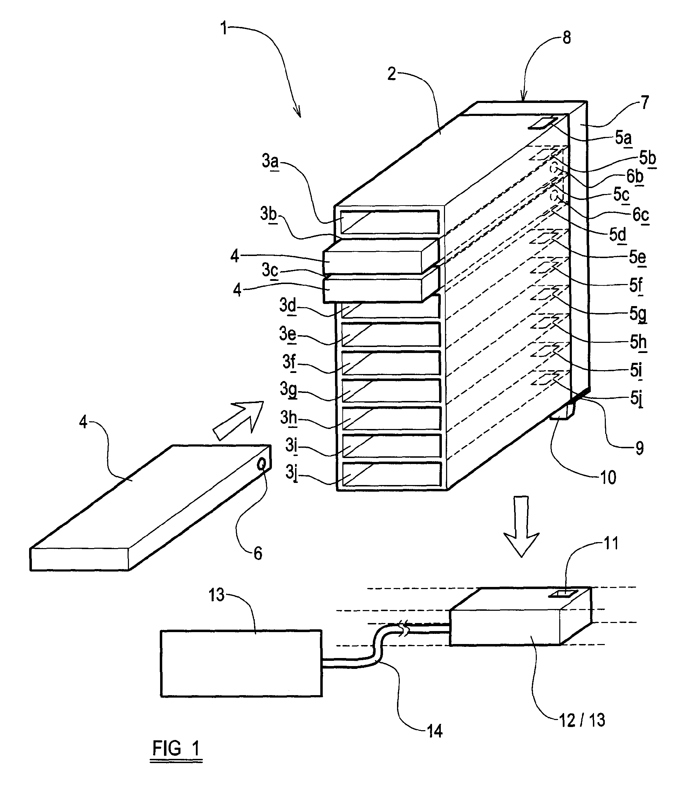

Referring to Figure 1, a storage structure embodying the present invention is in the form of a tape library 1 made up of a plurality of storage units 2 each of which is in the form of a magazine 2 having a plurality of bays or slots 3a-3j within which to store an item such as a tape cartridge 4. In this example of a tape library, the items are tape cartridges but the invention is equally applicable to the storage of other digital data storage devices such as optical disks, hard disks, floppy disks and other data storage media.

The library 1 also includes a library robotic tape picker (not shown) actuable to pick tape cartridges 4 from the bays or slots 3a-3j and insert them into a tape drive (not shown) for reading or writing operations and then subsequently to return the tape cartridge to its original bay or slot or another free bay or slot. The picker and tape drive aspects of the library are known and are therefore not discussed any further. In the present example, the library 1 comprises a single magazine 2 or storage unit having ten slots 3a-3j each of which can receive a tape cartridge 4. In each of the bays 3a-3j there is an associated cartridge memory reader 5a-5j. Each cartridge memory reader 5 is located in or adjacent its respective bay 3 at a position in which it can read a cartridge memory 6 provided on or in a tape cartridge 4 when a tape cartridge is stored in that bay. In the present example, the cartridge memory readers 5 are shown as being located toward the rear and on an upper surface of each slot 3.

Preferably the cartridge memory 6 is configured as a wireless communication device, for example a passive RF transponder incorporating a readable and writable solid state memory. The transponder carries a unique serial number and application-specific data that back-up applications can use to store information such as media header information and media history. The cartridge memory 6 carries the media header information for the data stored on the tape within the tape cartridge 4.

Since there are ten slots 3a-3j to receive ten tape cartridges 4, the magazine 2 is provided with ten cartridge memory readers 5a-5j. Each of the cartridge memory readers 5 is connected to a microprocessor 7 preferably located in a rear panel 8 of the magazine 2 in the present example. The microprocessor 7 is in turn connected to a I2C interface 9 also located in the rear panel 8 of the magazine 2. The I2C interface 9 is particularly well suited since this is the management interface used in tape libraries such as the Hewlett Packard Surestore "Galactica" libraries to pass information around the different library subsystems.

Referring to Figure 1, the magazine 2 is provided with an electrical connector (male part 10) for connection to a female part 11 of a connector incorporated in the library housing 12 to enable connection to the library controller 13 (central controller), also housed within the library housing, via wiring 14. The library controller 13 may itself include the female part 11 of the connector so that the magazine 2 connects directly to the library controller 13. Both direct connection to the library controller 13 and indirect connection via wiring 14 are shown in Figure 1.

The connection of the cartridge memory readers through the I2C interface to a power supply and the central controller provides the cartridge memory readers 5 with power and provides the necessary interface to read cartridge memory information gathered by the cartridge memory readers 5 from the cartridge memories 6.

The cartridge memory reader 5 is preferably configured to read the cartridge memory 6 of the tape cartridge 4 without requiring any physical contact between the reader 5 and the cartridge 4, i.e. by means of a contactless connection.

The microprocessor 7 in the rear panel 8 of the magazine 2 is programmed to read out the key information from the cartridge memory such as a unique serial number, manufacturing information, back-up application header (otherwise known as media header information), and media history. This information is read out from a cartridge memory 6 when the new tape cartridge 4 is detected as having been inserted into a slot in the magazine or if the entire magazine is changed.

The reading operation is preferably carried out as a routine polling operation conducted every few seconds to read out the unique serial number of each of the cartridge memories in the slots. If a new unique serial number is detected, then the remainder of the information carried on the relevant cartridge memory can be read out by the respective cartridge memory reader 5 and provided over the interface 9 to the library controller 13 (the central controller for the library 1).

The media header information stored on the cartridge memory 6 of each tape cartridge 4 comprises machine readable information readable by the cartridge memory reader 5 associated with each bay or slot 3 in the magazine 2 or unit. It should be noted that at least two sets of data are provided on the tape cartridge: one set of data comprising the data stored on the tape within the cartridge, usually back-up information but including media header information; and the other set of data comprising the machine readable information stored in the cartridge memory 6 (passive RF transponder) separately from the tape. The machine readable information in the cartridge memory 6 comprises at least media header information for the data stored on the tape. There is therefore an association between the data stored on the cartridge memory 6 and the data stored on the tape within the tape cartridge 4. Inventory information can therefore be gathered from the cartridge memories 6 by the cartridge memory readers 5 and made available to the library controller 13 without recourse to operating the library robotics or requiring any user intervention.

This arrangement of constant polling allows a rolling inventory to be maintained when a user replaces several tape cartridges manually or a user introduces a new tape cartridge 4 through the "mail slot" of the tape library 1. The newly introduced tape cartridge 4 can then be moved into a slot 3 in an existing magazine 2 via the library front panel controls, a web-based interface or by the back-up application itself.

The microprocessor 7 on board the magazine 2 maintains a current register of the cartridge memory information for each tape cartridge 4 in the magazine so as to provide to the library controller 13 with an up-to-date inventory immediately upon request. The microprocessor 7 on the magazine 2 does not need to keep historical cartridge memory information for tape cartridges previously present in the magazine.

The library controller 13 is operable to poll all the magazines in the library upon power on and when a magazine is replaced (for example being based on a library door being opened then closed) and to check for each magazine whether the magazine is a "dumb" magazine or a magazine provided with cartridge memory readers (i.e. cartridge memory reader enabled). The check may be made over the I2C interface 9 to determine whether there is any response from the bus at the expected magazine addresses. If the newly loaded magazine 2 is equipped with cartridge memory readers 5 then the library controller 13 will include the cartridge memory information stored in the microprocessor of the magazine 2 whenever the library controller returns information on the current status of the tape cartridges 4 within each magazine 2. For magazines 2 provided with cartridge memory readers, the library 1 does not need to perform the physical inventory process for these magazines since that information is already provided by the cartridge memory information held by the microprocessor for that magazine - the magazine is always aware of which tape cartridges are within which slots 3.

The library controller 13 is also able to handle error conditions so as to detect, for example, whether a cartridge memory reader 5 for a particular slot 3 has failed based on diagnostic information provided by the magazine microprocessor 7 and also to carry out sanity checks by performing occasional physical inventories to ensure that the physical inventory matches information provided by the magazine microprocessors 7.

The back-up application detects whether or not complete cartridge memory information is provided for cartridge memory reader enabled magazines 2 so that a logical inventory can be provided based on information held by the magazine microprocessors rather than having to load each tape cartridge into a tape drive. This is actually the same support required for a tape library with a cartridge memory reader on the library media picker since the same cartridge memory information is gathered by the library when it performs its physical inventory. Thus, a back-up application supporting cartridge memory readers on library pickers will be able to support cartridge memory reader enabled magazines 2 with relatively few, or without any, changes or modifications.

It should be readily apparent that a tape library incorporating one or more magazines 2 enabled with cartridge memory readers 5 can provide, for those magazines, a substantially instant physical and logical inventory of the library slots without the need for any movement of the media or the robotic picker. A library incorporating only magazines 2 which are enabled with cartridge memory readers 5 means that such a library is fully on-line being ready for back-up or restore operations immediately after power on and immediately after a fresh magazine has been loaded. Cartridge memory reader magazines 2 can be provided as an optional item so it is up to the customer to chose whether or not to have a fast inventory system using cartridge memory reader magazines 2 for a specific cost.

The example described above and illustrated in Figure 1 comprises a tape library 1 with a single magazine 2. In an alternative embodiment, the tape library has no magazine but has instead fixed slots, each slot having an associated cartridge memory reader located therein or adjacent thereto to read the cartridge memory 6 of any tape cartridge 4 inserted in that slot 3.

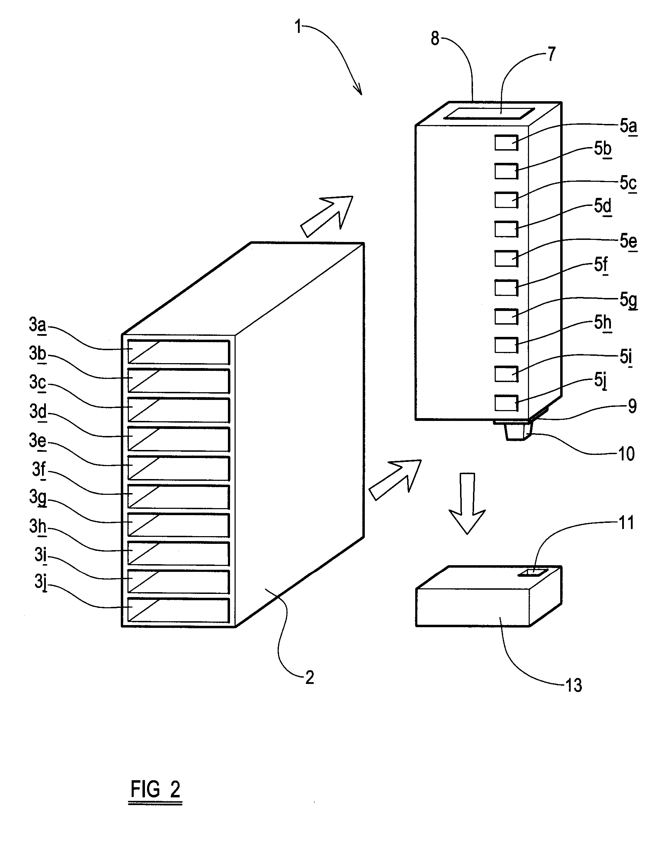

Referring now to Figure 2, a known magazine 2 is used which is not enabled with cartridge memory readers 5. The magazine 2 is inserted in the library to abut and preferably lock to a panel 8 having the microprocessor 7, the interface 9, the connector part 10 and the cartridge memory readers 5. The positions of the cartridge memory readers 5 register with respective slots 3 in the magazine so as to be able to read the cartridge memory 6 of a tape cartridge 4 inserted into a slot 3. This arrangement allows the library 1 to benefit from a logical and physical inventory without media movement and without having to increase the expense of the magazines 2 since the readers 5 are provided as part of the library infrastructure. The panel 8 can be a removable panel or one which is fixed within or part of the library housing.

Tape libraries or other storage structures may incorporate a mixture of magazines 2 or panels 8 which are provided with cartridge memory readers 5 or not. Fast inventories would therefore be possible of the magazines 2 in the library which are cartridge memory reader enabled but would require a traditional inventory to be carried out for magazines 2 which are not cartridge memory reader enabled.

The polling operation need not be routine but can be as and when an inventory is required, either on power up, immediately after a known change of tape cartridge 4 or magazine 2 has taken place or upon specific user demand.

In the present specification "comprises" means "includes or consists of" and "comprising" means "including or consisting of".

The features disclosed in the foregoing description, or the following claims, or the accompanying drawings, expressed in their specific forms or in terms of a means for performing the disclosed function, or a method or process for attaining the disclosed result, as appropriate, may, separately, or in any combination of such features, be utilised for realising the invention in diverse forms thereof.

## Claims

1. A storage structure comprising:
at least one storage unit having a plurality of locations, each location having a bay to store an item having a transponder carrying machine readable information; and
a plurality of readers, at least one reader being associated with each bay of the storage unit and operable to communicate wirelessly with a transponder of an item stored in the associated bay to read machine readable information.

2. A storage structure according to Claim 1, wherein the transponder includes a readable and writeable memory and the readers are operable to read and write machine readable information to the transponder.

3. A storage structure according to any preceding Claim, wherein the readers are connectable to a controller to enable machine readable information of items stored in the storage unit to be processed by the controller.

4. A storage structure according to Claim 4, further comprising a microprocessor connected to the readers and an interface for connecting the microprocessor to the controller.

5. A storage structure according to any preceding Claim, wherein the readers are mounted to the storage unit.

6. A storage structure according to any one of Claims 1 to 6, wherein the readers are mounted separate from the storage unit at positions adjacent the associated bays of the storage unit.

7. A storage structure according to any one of the preceding Claims, wherein the or each storage unit is removable from the storage structure.

8. A storage structure according to any preceding Claim, further comprising at least one item stored in the storage unit, the at least one item comprising a tape cartridge having a tape storing a first set of data and a transponder incorporating a memory storing a second set of data, the second set of data comprising machine readable information relating to the first set of data stored on the tape.

9. A storage structure according to any one of Claims 1 to 8, further comprising at least one item stored in the storage unit, the at least one item comprising an optical disk, hard disk or floppy disk.

10. A storage unit comprising:
a plurality of locations, each location having a bay to store an item having a transponder carrying machine readable information; and
a plurality of readers, at least one reader being associated with each bay of the storage unit and operable to communicate wirelessly with a transponder of an item stored in the associated bay to read machine readable information.

11. A storage unit according to Claim 1, wherein the transponder includes a readable and writeable memory and the readers are operable to read and write machine readable information to the transponder.

12. The storage unit of Claim 10 or 11, further comprising a microprocessor connected to the readers and an interface for connecting the microprocessor to a controller for processing machine readable information of items stored in the storage unit.

13. A digital data storage device library comprising:
at least one storage unit having a plurality of locations, each location having a bay to store a digital data storage device having a transponder carrying machine readable information; and
a plurality of readers, at least one reader being associated with each bay of the storage unit and operable to communicate wirelessly with a transponder of a digital data storage device stored in the associated bay to read machine readable information.

14. A library according to Claim 13, wherein the transponder includes a readable and writeable memory and the readers are operable to read and write machine readable information to the transponder.

15. A method of making or taking an inventory of the location and/or stored content of items in a storage structure, the storage structure having a plurality of locations, each location having a bay to store an item having a transponder carrying machine readable information, each bay having an associated reader operable to communicate wirelessly with a transponder of an item stored in the bay to read machine readable information, the method comprising:
the readers reading by wireless communication the machine readable information from items stored in the bays; and
processing the read information in combination with the location of the associated reader to provide the inventory.

16. A method according to Claim 15, wherein the storage structure comprises at least one storage unit having a plurality of the locations, and the method further comprises taking an inventory upon a storage unit being removed from, or introduced to, the storage structure.

17. A method according to Claim 15 or 16, wherein the storage structure comprises at least one storage unit having a plurality of the locations and a door which is opened to remove a storage unit from, or introduce a storage unit to, the storage structure, the method further comprises taking the inventory upon the door being opened.

18. A storage structure substantially as hereinbefore described with reference to and as shown in the accompanying drawings.

19. A storage unit substantially as hereinbefore described with reference to and as shown in the accompanying drawings.
